# EUROPÄISCHE PATENTSCHRIFT

(11) **EP 2 676 003 B1**
(45) Veröffentlichungstag und Bekanntmachung des Hinweises auf die Patenterteilung: **16.08.2017**
(21) Anmeldenummer: 12714686.8
(22) Anmeldetag: 12.04.2012
(51) Int. Cl.: F01D 17/14, F16K 3/26, F16K 1/44, F16K 1/52

(54) **KOMBINIERTES DAMPFTURBINENVENTIL MIT INTEGRIERTEM VORHUBDESIGN**
COMBINED STEAM TURBINE VALVE WITH INTEGRATED PILOT CONTROL DESIGN
SOUPAPE DE TURBINE À VAPEUR COMBINÉE DOTÉE D'UNE CONFIGURATION DE COMMANDE PILOTE INTEGRÉE

(30) Priorität: 29.04.2011 EP 11164262
(43) Veröffentlichungstag der Anmeldung: 25.12.2013
(73) Patentinhaber: Siemens Aktiengesellschaft, 80333 München (DE)
(72) Erfinder: NIEDEREHE, Maximilian, 47259 Duisburg (DE); WHITEAR, Daniel, 33415 Verl (DE)
(86) Internationale Anmeldenummer: PCT/EP2012/056617
(87) Internationale Veröffentlichungsnummer: WO 2012/146482

(56) Entgegenhaltungen:
- EP-A1- 0 004 209
- WO-A1-2007/025945
- DE-A1- 1 425 707
- DE-A1- 1 916 876
- DE-A1- 2 523 296
- FR-A1- 2 459 416
- JP-A- 9 032 996
- US-A- 3 428 090

## Beschreibung

Die Erfindung betrifft ein Stell-Schnellschluss-Ventil für eine Dampfturbine, mit einem Ventilgehäuse, an dem innenseitig ein Führungstopf vorsteht, dessen Achse mittig zu einem Ventilsitz des Stell-Schnellschluss-Ventils zeigt und in dem konzentrisch sowie in die Achsrichtung unabhängig voneinander längsverschiebbar ein Stellventilkegel und ein Schnellschlussventilkegel angeordnet sind, wobei der Stellventilkegel gegen den Führungstopf dampfdicht abgedichtet ist, wobei der Schnellschlussventilkegel gegen den Führungstopf dampfdicht abgedichtet ist, wobei das Stell-Schnellschluss-Ventil einen Eingangsdruckraum und einen gegenüber dem Eingangsdruckraum abdichtbaren Ausgangsdruckraum aufweist, wobei eine Zentralspindel zum Vorantrieb des Schnellschlussventilkegels in Richtung Ventilsitz ausgebildet ist.

Im Dampfturbinenbau werden Turbinenventile benötigt, die hohen thermischen und mechanischen Anforderungen genügen müssen. In einem Dampfkraftwerk kann im Dampferzeuger ein Dampf erzeugt werden, der vergleichsweise hohe Temperaturen und hohe Drücke aufweist. So kommen beispielsweise Temperaturen von über 620°C bei einem Druck von über 300bar vor. Solch hohe Temperaturen und Drücke stellen enorme Belastungen an die jeweiligen Bauteile der Dampfturbine als auch auf die Turbinenventile dar. In der Regel wird in einer Frischdampfleitung jeweils ein Schnellschluss- und ein Stell-Ventil angeordnet. Das Schnellschlussventil ist hierbei ständig geöffnet und das Stellventil regelt den Zufluss des Dampfes zur Dampfturbine hin. Es existieren Situationen, bei denen die Dampfzufuhr abrupt versperrt werden muss. In dieser Situation reagiert das Schnellschlussventil schlagartig und sperrt die Dampfzufuhr innerhalb von Millisekunden ab. Es ist bekannt, das Schnellschluss- und das Stellventil innerhalb eines Ventilgehäuses anzuordnen. Dies spart Bauraum und somit Fertigungs- und Herstellungskosten.

Allerdings ist eine solch kompakte Bauweise in einem Ventilgehäuse konstruktionsbedingt komplizierter als separate Ausführungsformen mit jeweils einem Schnellschluss- und einem Stellventil. So stellt beispielsweise eine Herausforderung dar ein geschlossenes Schnellschlussventil mit möglichst geringen Kräften wieder zu öffnen.

An dieser Stelle setzt die Erfindung an, deren Aufgabe es ist, ein Stell-Schnellschluss-Ventil anzugeben, das mit geringeren Kräften zum Öffnen des Schnellschlussventils auskommt.

Stand der Technik ist die JP 09032996 "Integral Typ Fluid Stop Valve and Control Valve" (1997). Diese beschreibt ein Ventil mit integrierter Stell- und Regelfunktionalität. Über Strömungskanäle im Schnellschlussventilkegel wird bei Anhebung der Spindel ein Druckausgleich zwischen Ausgangsdruckraum und Eingangsdruckraum ermöglicht, sodass eine Öffnung des Schnellschlussventilkegels mit geringeren Kräften möglich wäre. Diese Ausführung bringt jedoch den Nachteil mit sich, dass der Stellventilkegel eine gewisse Größe aufweisen muss, um trotz Materialschwächung durch Druckausgleichsbohrungen der Belastung eines Schaltvorgangs standhalten zu können. Weiterhin muss ein gewisser Abstand zwischen Stellventilkegel und Schnellschlussventilkegel eingehalten werden, der einen Druckausgleich ermöglicht und eine Bewegung des Stellventils gewährleistet. Dies resultiert insgesamt in einer vergrößerten radialen Ausführung als die der Erfindung.

Ein weiterer Stand der Technik ist die DE 1 916 876 "Kombiniertes Absperr- und Regelventil" (1968). Diese beschreibt eine technische Lösung bei der Absperr- und Regelfunktion in einem gemeinsamen Gehäuse untergebracht werden mit der Zielsetzung einer Bauraumeinsparung. Durch konzentrische Lagerung des Schnellschlussventilkegels innerhalb des Stellventilkegels wird über ineinander verschiebbare Ventilkegel eine kompakte Bauweise im geöffneten Zustand ermöglicht. Bei einer schlagartigen Schließung des Schnellschlussventils wird jedoch an seiner Schließposition ein Volumen freigegeben, das durch Ausbildung eines Unterdrucks dem Schließvorgang entgegen wirken kann. Demzufolge müssen bei dieser Lösung größere Kräfte zur Bewegung des Ventilkegels aufgebracht werden.

Gelöst wird diese Aufgabe durch ein Stell-Schnellschluss-Ventil für eine Dampfturbine gemäß Anspruch 1.

Die Erfindung geht von dem Aspekt aus, dass bei der konstruktiven Ausführung von Dampfturbinenventilen, wobei das Stell- und Schnellschlussventil in einem Gehäuse ausgeführt sind vergleichsweise große Ventilkörper entstehen. Des Weiteren geht die Erfindung davon aus, dass beim Schließen eines Schnellschlussventils der Fall vorkommen kann, dass hinter dem Schnellschlussventilkegel ein Volumen freigegeben wird, ohne das Dampf nachströmen kann, was dazu führt, dass ein Unterdruck in diesen Rückraum ausgebildet wird, welcher das Kräftegleichgewicht soweit verändert, dass ein störungsfreies Schließen des Schnellschlussventilkegels verhindert werden würde. Erfindungsgemäß wird daher eine strömungstechnische Verbindung zwischen dem Rückraum, der hinter dem Schnellschlussventilkegel angeordnet ist und dem Ausgangsdruckraum ausgebildet. Das bedeutet, dass die Drücke zwischen diesen beiden Räumen gleich groß sind. Das bedeutet, dass dies ein Einfluss auf die aufzuwendenden Kräfte zur Bewegung des Schnellschlussventilkegels hat. Die Kräfte können daher geringer sein. Vorteilhafte Weiterbildungen sind in den Unteransprüchen angegeben.

Die Zentralspindel ist verschiebbar gegenüber dem Schnellschlussventilkegel ausgebildet. Das bedeutet, dass eine relative Bewegung zwischen der Zentralspindel und dem Schnellschlussventilkegel möglich ist. Insbesondere wird das hierbei ausgenutzt, um beim Öffnen und beim Schließen strömungstechnische Verbindungen herzustellen bzw. zu schließen.

Der Schnellschlussventilkegel weist einen ersten Druckausgleichskanal auf, der durch einen in der Zentralspindel ausgebildeten Vorhubkegel zum Schließen des Schnellschlussventils verschließbar und beim Öffnen des Schnellschlussventils wiederöffenbar ist, wobei der erste Druckausgleichskanal die strömungstechnische Verbindung zwischen dem Rückraum und dem Ausgangsdruckraum bildet. Somit wird konstruktiv ausgenutzt, dass im Schnellschlussventilkegel selbst eine strömungstechnische Verbindung hergestellt werden kann, die durch eine relative Bewegung zwischen dem Vorhubkegel und dem Schnellschlussventilkegel realisiert wird.

Der Führungstopf weist einen zweiten Druckausgleichskanal auf, der die zweite strömungstechnische Verbindung zwischen dem Rückraum und dem Eingangsdruckraum bildet. Somit kann ebenfalls in einer einfachen konstruktiven Weise eine strömungstechnische Verbindung zwischen dem Rückraum und dem Eingangsdruckraum hergestellt werden. Dies wird durch einfach ausgebildete Kanäle in dem Führungstopf realisiert.

Der Schnellschlussventilkegel ist innenseitig an dem Führungstopf angeordnet. Das bedeutet, dass der Schnellschlussventilkegel und somit das Schnellschlussventil innerhalb und das Stellventil um das Schnellschlussventil herum angeordnet ist.

In vorteilhaften Weiterbildungen ist der Schnellschlussventilkegel mit ersten Kolbenringen gegenüber dem Führungstopf dampfdicht ausgebildet.

Genauso wird in vorteilhafter Weise der Stellventilkegel mittels des zweiten Kolbenringes gegenüber dem Führungstopf dampfdicht ausgebildet.

Ein Ausführungsbeispiel der Erfindung wird nachfolgend anhand der Zeichnung beschrieben. Diese soll das Ausführungsbeispiel nicht maßstäblich darstellen, vielmehr ist die Zeichnung in schematisierter und/oder leicht verzerrter Form ausgeführt. Im Hinblick auf Ergänzungen der aus der Zeichnung mittelbar erkennbaren Lehren wird hier auf den einschlägigen Stand der Technik verwiesen.

Im Einzelnen zeigt die Zeichnung in:

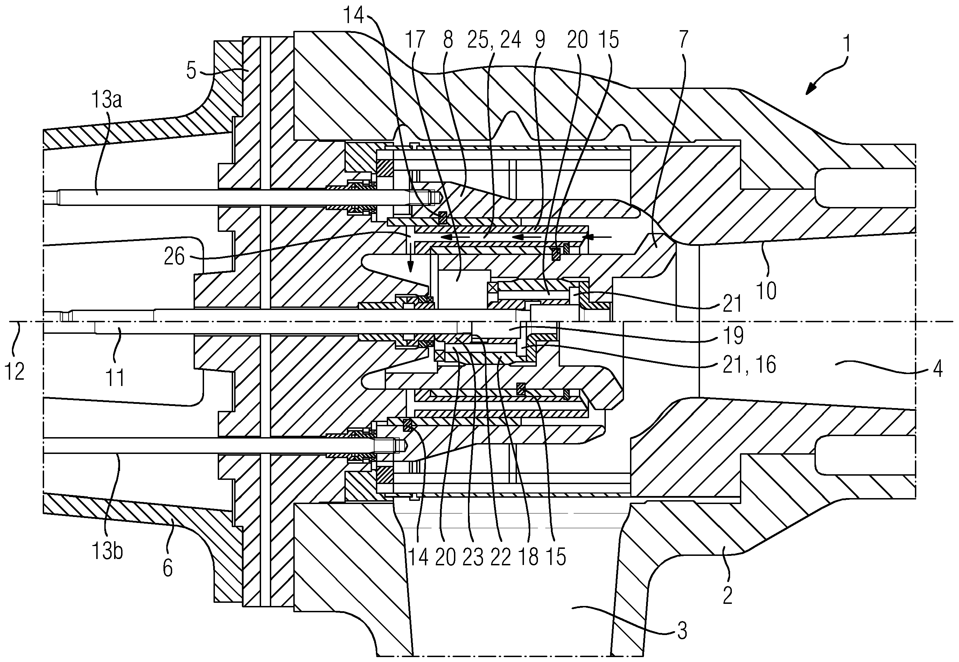

- Figur 1: eine Querschnittsansicht eines Stell-Schnellschluss-Ventils.

In der Figur 1 ist ein Stell-Schnellschluss-Ventil 1 in einer Querschnittsansicht dargestellt. Das Stell-Schnellschluss-Ventil 1 umfasst im Wesentlichen ein Ventilgehäuse 2, wobei innerhalb des Ventilgehäuses 2 das kombinierte Schnellschluss- und Stell-Ventil angeordnet ist. Innerhalb des Ventilgehäuses 2 ist ein Eingangsdruckraum 3 und ein Ausgangsdruckraum 4 angeordnet. In den Eingangsdruckraum 3 strömt ein Dampf ein und wird in den Ausgangsdruckraum 4 umgeleitet. Bei einer vollständigen Öffnung des Stell-Schnellschluss-Ventils 1 ändern sich die thermodynamischen Größen des Frischdampfes auf dem Weg vom Eingangsdruckraum 3 zum Ausgangsdruckraum 4 kaum.

In dem in Figur 1 dargestellten Beispiel erfolgt eine Umlenkung des Frischdampfes vom Eingangsdruckraum 3 zum Ausgangsdruckraum 4 um 90°.

An dem Ventilgehäuse 2 wird ein Aufnahmeelement 5 angeordnet. Dieses Aufnahmeelement 5 wird über geeignete Verbindungen dampfdicht mit dem Ventilgehäuse 2 verbunden. Das Ventilgehäuse 6 ist zum Aufnehmen eines Antriebs für die Ventilspindeln ausgebildet.

Zwischen dem Eingangsdruckraum 3 und dem Ausgangsdruckraum 4 ist ein Schnellschlussventilkegel 7 und ein Stellventilkegel 8 angeordnet. Zwischen dem Schnellschlussventilkegel 7 und dem Stellventilkegel 8 ist ein Führungstopf 9 angeordnet, der im Ventilgehäuse innenseitig vorsteht. Der Führungstopf 9 ist integral mit dem Aufnahmeelement 5 ausgebildet.

Innerhalb des Ventilgehäuses 2 ist ein Ventilsitz 10 ausgebildet, an dem der Schnellschlussventilkegel 7 und der Stellventilkegel 8 in Kontakt bringbar ist. Der Ventilsitz 10 ist ein separates Bauelement, das innerhalb des Ventilgehäuses 2 über geeignete Mittel angebracht werden kann. Sowohl der Schnellschlussventilkegel 7 als auch der Stellventilkegel 8 sind an diesem Ventilsitz 10 angeordnet. Der Führungstopf 9 ist mittig zu diesem Ventilsitz 10 ausgebildet. Der Schnellschlussventilkegel 7 und der Stellventilkegel 8 sind konzentrisch um den Führungstopf 9 in die Achsrichtung 12 unabhängig voneinander längsverschiebbar ausgebildet. Dazu ist eine Zentralspindel 11 vorgesehen, die in der Achsrichtung 12 verschiebbar ist und eine Kraft auf den Schnellschlussventilkegel 7 ausüben kann. Des Weiteren sind, wie in Figur 1 dargestellt, zwei Antriebsspindeln 13a und 13b dargestellt, die eine Kraft auf den Stellventilkegel 8 in Achsrichtung 12 ausüben können. In alternativen Ausführungsformen können drei auf dem Umfang verteilte Antriebsspindeln eingesetzt werden.

Der Stellventilkegel 8 ist gegen den Führungstopf 9 dampfdicht abgedichtet. Dies erfolgt über eine zweite Kolbenringpaarung 14. Der Schnellschlussventilkegel 7 ist ebenfalls gegen den Führungstopf 9 mit einer ersten Kolbenringpaarung 15 dampfdicht abgedichtet.

Der Eingangsdruckraum 3 ist mittels des Schnellschlussventilkegels 7 und dem Stellventilkegel 8 abdichtbar gegenüber dem Ausgangsdruckraum 4 ausgebildet.

Die Zentralspindel 11 ist derart ausgebildet, dass beim Öffnen des Schnellschlussventilkegels 7 eine strömungstechnische Verbindung 16 zwischen einem Rückraum 17, der hinter dem Schnellschlussventilkegel 7 angeordnet ist, und dem Ausgangsdruckraum 4 entsteht. Wie in Figur 1 zu sehen, wird dies folgendermaßen realisiert:
An den Schnellschlussventilkegel 7 ist ein weiteres Bauelement 18 angepasst, wobei in diesem weiteren Bauelement 18 die strömungstechnische Verbindung 16 realisiert ist. Die strömungstechnische Verbindung 16 entsteht hierbei durch eine relative Bewegung zwischen einem mit der Zentralspindel 11 verbundenen Zentralspindelkegel 19 und dem weiteren Bauelement 18. Die strömungstechnische Verbindung 16 umfasst hierbei einen parallel zur Achsrichtung 12 angeordneten ersten Strömungskanal 20 und einen im Wesentlichen senkrecht dazu angeordneten zweiten Strömungskanal 21. Der erste Strömungskanal 20 mündet in den Rückraum 17. Der zweite Strömungskanal 21 mündet in den Ausgangsraum 4. Der erste Strömungskanal 20 und der zweite Strömungskanal 21 sind strömungstechnisch miteinander verbunden. Sofern sich die Zentralspindel 11 nach links bewegt, wird ebenso der Zentralspindelkegel 19 ebenfalls nach links bewegt und öffnet die strömungstechnische Verbindung zwischen dem zweiten Strömungskanal 21 und dem Ausgangsdruckraum 4. Diese Öffnung wird begrenzt durch einen Anschlag 22, der durch einen Vorsprung 23 im weiteren Bauelement 18 realisiert ist. Der Vorsprung 23 und der Zentralspindelkegel 19 stoßen quasi aufeinander. Eine weitere Bewegung der Zentralspindel 19 nach links zieht den Schnellschlussventilkegel 7 ebenfalls mit nach links. Dieser Vorgang ist in der Figur 1 in der unter der Achsrichtung 12 dargestellten Anordnung innerhalb des Ventilgehäuses 2 zu sehen.

Oberhalb der Achsrichtung 12 ist der Vorgang während des Schließens des Schnellschlussventilkegels 7 dargestellt. Hierbei ist zu sehen, dass der Zentralspindelkegel 19, der relativ zum weiteren Bauelement 18 bewegt werden kann, die strömungstechnische Verbindung zwischen dem zweiten Strömungskanal 21 und dem Außendruckraum 4 verschließt. Eine weitere Bewegung der Zentralspindelkegel 19 nach rechts bewegt den Schnellschlussventilkegel 7 ebenfalls nach rechts bis zum Ventilsitz 10. Durch die strömungstechnische Verbindung 16 während des Öffnens ist ein Druckausgleich zwischen dem Ausgangsdruckraum 4 und dem Rückraum 17 möglich. Das bedeutet, dass der Druck gleich ist zwischen dem Ausgangsdruckraum 4 und dem Rückraum 17.

Der Führungstopf 9 ist des Weiteren derart ausgebildet, dass in dieser eine zweite strömungstechnische Verbindung 24 zwischen dem Rückraum 17 und dem Eingangsdruckraum 3 entsteht, wenn das Stellventil geöffnet ist. Dazu wird im Wesentlichen parallel zur Achsrichtung 12 ein dritter Strömungskanal 25 und ein senkrecht dazu angeordneter vierter Strömungskanal 26 ausgebildet. Der dritte Strömungskanal 25 mündet in den Eingangsdruckraum 3 und der vierte Strömungskanal 26 mündet in den Rückraum 17. Der erste Strömungskanal 20 und der zweite Strömungskanal 21 können auch als Druckausgleichskanal bezeichnet werden.
So wird ein Druckausgleich geschaffen, welcher zum einwandfreien Schließen des Schnellschlussventilkegels notwendig ist, da sich hinter dem Kegel ein Unterdruck einstellen würde, welcher das Schließen einschränken bzw. behindern würde.

Die strömungstechnische Verbindung 24 kann auch als zweiter Druckausgleichskanal bezeichnet werden.

Es werden dadurch zwei Arbeitsräume (Eingangsdruckraum 3 und Ausgangsdruckraum 4) ausgebildet. Durch den Zentralspindelkegel 19 wird der Schnellschlussventilkegel 7 des Schnellschlussventils druckentlastet. Im geschlossenen Zustand wirken große Dampfkräfte auf den Schnellschlussventilkegel 7, welcher aus der Druckdifferenz vor dem Schnellschlussventilkegel 7 und hinter dem Schnellschlussventilkegel 7 resultieren. Um den Schnellschlussventilkegel 7 gegen diese Dampfkräfte zu Öffnen müsste ein sehr großer Antrieb verwendet werden. Um dies zu vermeiden wird der Schnellschlussventilkegel 7 mit einem Zentralspindelkegel 19 ausgeführt. Beim Öffnen wird zuerst der verhältnismäßig kleine Zentralspindelkegel 19 geöffnet und sorgt damit für einen Druckausgleich über den Zentralspindelkegel 19. Danach wird der Schnellschlussventilkegel 7 geöffnet. Da beim Schließen zunächst der Zentralspindelkegel 19 schließt und damit die Dampfzufuhr des Rückraums 17 unterbindet, entsteht das Problem, dass über die Kolbenringe kein Dampf hinter den Schnellschlussventilkegel 7 strömen kann, so dass sich unter Freigabe des Volumens im Rückraum des Schnellschlussventilkegels 7 ein Unterdruck ausbildet. Hierdurch wird das Kräftegleichgewicht soweit geändert, dass ein störungsfreies Schließen des Schnellschlussventilkegels 7 verhindert werden würde. Dies wird umgangen, indem die zweite strömungstechnische Verbindung 24 eine permanente Dampfzufuhr garantiert.

Insgesamt entsteht eine Verkleinerung der auf die Stellventilkegel 8 und Schnellschlussventilkegel 7 wirkenden Dampfkräfte. Durch die Reduzierung der Dampfkräfte verkleinern sich die Antriebskräfte und die mechanische Belastung der Ventilspindeln sinkt insgesamt. Dadurch können kleinere und günstigere Antriebe und Ventilbauteile verwendet werden.

## Patentansprüche

1. Stell-Schnellschluss-Ventil (1) für eine Frischdampfleitung einer Dampfturbine, mit einem Ventilgehäuse (2), an dem innenseitig ein Führungstopf (9) vorsteht, dessen Achse mittig zu einem Ventilsitz (10) des Stell-Schnellschluss-Ventils (1) zeigt und in dem konzentrisch sowie in die Achsrichtung (12) unabhängig voneinander längsverschiebbar ein Stellventilkegel (8) und ein Schnellschlussventilkegel (7) angeordnet sind,
wobei der Stellventilkegel (8) gegen den Führungstopf (9) dampfdicht abgedichtet ist,
wobei der Schnellschlussventilkegel (7) gegen den Führungstopf (9) dampfdicht abgedichtet ist,
wobei das Stell-Schnellschluss-Ventil (1) einen Eingangsdruckraum (3) und einen gegenüber dem Eingangsdruckraum (3) abdichtbaren Ausgangsdruckraum (4) aufweist,
wobei eine Zentralspindel (11) zum Vorantrieb des Schnellschlussventilkegels (7) in Richtung Ventilsitz (10) ausgebildet ist, wobei
die Zentralspindel (11) derart ausgebildet ist, dass beim Öffnen des Schnellschlussventilkegels (7) eine strömungstechnische Verbindung (16) zwischen dem Rückraum (17), der hinter dem Schnellschlussventilkegel (7) angeordnet ist, und dem vorderen Ausgangsdruckraum (4), entsteht, wobei die Zentralspindel (11) verschiebbar gegenüber dem Schnellschlussventilkegel (7) ausgebildet ist,
wobei der Schnellschlussventilkegel (7) einen ersten Druckausgleichskanal (20) aufweist, der durch einen in der Zentralspindel (11) ausgebildeten Vorhubkegel beim Schließen des Schnellschlussventils verschließbar und beim Öffnen des Schnellschlussventils wiederöffenbar ist, wobei der erste Druckausgleichskanal (20) die strömungstechnische Verbindung (16) zwischen dem Rückraum (17) und dem Ausgangsdruckraum (4) bildet, wobei der Schnellschlussventilkegel (7) innenseitig an dem Führungstopf (9) angeordnet ist, und
wobei der Stellventilkegel (8) außenseitig an dem Führungstopf (9) angeordnet ist,
**dadurch gekennzeichnet, dass**
der Führungstopf (9) einen zweiten Druckausgleichskanal (24) aufweist, der eine zweite strömungstechnische Verbindung (24) zwischen dem Rückraum (17) und dem Eingangsdruckraum (3) bildet.

2. Stell-Schnellschluss-Ventil (1) nach Anspruch 1,
wobei der Schnellschlussventilkegel (7) mittels einer ersten Kolbenringpaarung (15) gegenüber dem Führungstopf (9) dampfdicht ausgebildet ist.

3. Stell-Schnellschluss-Ventil (1) nach Anspruch 1 oder 2, wobei der Stellventilkegel (8) mittels einer zweiten Kolbenringpaarung (14) gegenüber dem Führungstopf (9) dampfdicht ausgebildet ist.

## Claims

1. Quick closing control valve (1) for a live steam line of a steam turbine, with a valve housing (2) inside which there protrudes a guide pot (9) whose axis is oriented centrally towards a valve seat (10) of the quick closing control valve (1), and in which there are arranged a control valve cone (8) and a quick-closing valve cone (7) which are mutually independently longitudinally displaceable, both concentrically and in the axial direction (12),
wherein the control valve cone (8) is sealed in a steam-tight manner with respect to the guide pot (9),
wherein the quick-closing valve cone (7) is sealed in a steam-tight manner with respect to the guide pot (9), wherein the quick closing control valve (1) has an inlet pressure space (3) and an outlet pressure space (4) which can be sealed with respect to the inlet pressure space (3), wherein a central spindle (11) is formed to drive the quick-closing valve cone (7) in the direction of the valve seat (10), wherein
the central spindle (11) is designed so as to produce, when the quick-closing valve cone (7) is opened, a fluidic connection (16) between the back space (17), which is arranged behind the quick-closing valve cone (7), and the front outlet pressure space (4),
wherein the central spindle (11) is designed such that it can be displaced with respect to the quick-closing valve cone (7),
wherein the quick-closing valve cone (7) has a first pressure-equalizing duct (20) which can be closed, when the quick-closing valve is closed, by an advancing cone formed in the central spindle (11), and which can be reopened when the quick-closing valve is opened,
wherein the first pressure-equalizing duct (20) forms the fluidic connection (16) between the back space (17) and the outlet pressure space (4), wherein
the quick-closing valve cone (7) is arranged on the inside of the guide pot (9), and
wherein the control valve cone (8) is arranged on the outside of the guide pot (9),
**characterized in that**
the guide pot (9) has a second pressure-equalizing duct (24) which forms a second fluidic connection (24) between the back space (17) and the inlet pressure space (3).

2. Quick closing control valve (1) according to Claim 1,
wherein the quick-closing valve cone (7) is made steam-tight with respect to the guide pot (9) by means of a first piston ring pairing (15).

3. Quick closing control valve (1) according to Claim 1 or 2, wherein the control valve cone (8) is made steam-tight with respect to the guide pot (9) by means of a second piston ring pairing (14).

## Revendications

1. Soupape (1) de réglage-fermeture rapide d'un conduit pour de la vapeur vive d'une turbine à vapeur, comprenant un corps (2) de soupape, sur lequel fait saillie, du côté intérieur, un pot (9) de guidage, dont l'axe est dirigé au milieu vers un siège (10) de la soupape (1) de réglage-fermeture rapide et dans laquelle, concentriquement, ainsi que dans la direction (12) de l'axe, sont disposés, pouvant coulisser longitudinalement indépendamment l'un de l'autre, un cône (8) de soupe de réglage et un cône (7) de soupape de fermeture rapide,
dans laquelle le cône (8) de soupape de réglage est rendu étanche à la vapeur par rapport au pot (9) de guidage, dans laquelle le cône (7) de soupape de fermeture rapide est rendu étanche à la vapeur par rapport au pot (9) de guidage,
dans laquelle la soupape (1) de réglage-fermeture rapide a un espace (3) d'entrée sous pression et un espace (4) de sortie sous pression pouvant être rendu étanche par rapport à l'espace d'entrée sous pression,
dans laquelle une broche (11) centrale est constituée pour faire avancer le cône (7) de soupape de fermeture rapide en direction du siège (10) de soupape, dans laquelle la broche (11) centrale est constituée de manière à créer, à l'ouverture du cône (7) de soupape de fermeture rapide, une liaison (16) en technique d'écoulement entre l'espace (4) de sortie plus en avant sous pression et l'espace (17) arrière, qui est disposé derrière le cône (7) de soupape de fermeture rapide,
dans laquelle la broche (11) centrale est constituée coulissante par rapport au cône (7) de soupape de fermeture rapide,
dans laquelle le cône (7) de soupape de fermeture rapide a un premier conduit (20) de compensation de la pression, qui peut, à la fermeture de la soupape de fermeture rapide, être fermé par un cône d'avance constitué dans la broche (11) centrale et être réouvert à l'ouverture de la soupape de fermeture rapide,
dans laquelle le premier conduit (20) de compensation de la pression forme la liaison (16) en technique d'écoulement entre l'espace (17) arrière et l'espace (4) de sortie sous pression, dans laquelle
le cône (7) de soupape de fermeture rapide est disposé du côté intérieur sur le pot (9) de guidage et
dan laquelle le cône (8) de soupape de réglage est disposé du côté extérieur sur le pot (9) de guidage,
**caractérisée en ce que**
le pot (9) de guidage a un deuxième conduit (24) de compensation de la pression, qui forme une deuxième liaison (24) en technique d'écoulement entre l'espace (17) arrière et l'espace (3) d'entrée sous pression.

2. Soupape (1) de réglage-fermeture rapide suivant la revendication 1,
dans laquelle le cône (7) de fermeture rapide est constitué d'une manière étanche à la vapeur par rapport au pot (9) de guidage au moyen d'une première paire (15) de segments de piston.

3. Soupape (1) de réglage-fermeture rapide suivant la revendication 1 ou 2,
dans laquelle le cône (8) de soupape de réglage est constitué d'une manière étanche à la vapeur par rapport au pot (9) de guidage au moyen d'une deuxième paire (14) de segments de piston.
